# EUROPEAN PATENT SPECIFICATION

(11) **EP 3 656 565 B1**
(45) Date of publication and mention of the grant of the patent: **27.10.2021**
(21) Application number: 19199277.5
(22) Date of filing: 24.09.2019
(51) Int. Cl.: B41J 3/407, B41J 3/28, B41J 3/36

(54) **PRINTER AND PRINTER SYSTEM**
DRUCKER UND DRUCKERSYSTEM
IMPRIMANTE ET SYSTÈME D'IMPRESSION

(30) Priority: 23.11.2018 CN 201811403915
(43) Date of publication of application: 27.05.2020
(73) Proprietor: Beijing Xiaomi Mobile Software Co., Ltd., Beijing 100085 (CN)
(72) Inventor: XING, Zheng, Beijing, 100085 (CN); XIE, Yingchun, Beijing, 100085 (CN)
(74) Representative: Kudlek, Franz Thomas

(56) References cited:
- US-B1- 9 849 693

## Description

### TECHNICAL FIELD

The present disclosure relates to the field of printer technology, and particularly to a printer and a printer system.

### BACKGROUND

In the related art, a printer may be used to print a preset pattern on a specified wall surface. However, in order to complete printing on the entire wall surface, it is necessary to hold the printer by hand and to move it on the wall surface, or to set a moving pedrail for the printer, which increases operational complexity and structural complexity of the printer. A printer according to the preamble of claim 1 is known from US 9 849 693 B1.

### SUMMARY

The present invention provides a printer and a printer system to improve operational convenience of the printer while reducing structural complexity of the printer.

According to a first aspect of the present invention, a printer includes: a main body, including a bottom part adjacent to a surface to be printed and a top part opposite to the bottom part, wherein the bottom part is provided with an air inlet and an ink outlet, and the top part is provided with an air outlet; an adsorption assembly, assembled in the main body and including an air suction mechanism, wherein an air intake passage of the air suction mechanism is opened to the air inlet, and an air outlet passage of the air suction mechanism is opened to the air outlet; a printing assembly, assembled in the main body and including a main control and an ink outlet mechanism electrically connected to the main control, wherein the ink outlet mechanism is opened to the ink outlet; and a moving assembly, assembled on the bottom part of the main body and is electrically connected to the main control. The moving assembly includes at least one pedrail.

Optionally, the top part of the main body includes an opening and a cover plate that movably cooperates with the opening, an interior part of the main body is provided with an accommodating part corresponding to the opening, the printing assembly further includes an ink cartridge opened to the ink outlet mechanism, and the ink cartridge is assembled in the accommodating part.

Optionally, the adsorption assembly further includes a suction detecting mechanism electrically connected to the air suction mechanism.

Optionally, the bottom part includes an edge region, and the ink outlet is arranged at the edge region.

Optionally, the air inlet includes a plurality of strip-shaped holes arranged side by side.

Optionally, the air suction mechanism includes a turbo.

Optionally, the moving assembly includes two pedrails respectively arranged on both sides of the air inlet.

Optionally, material of the pedrail includes soft rubber.

According to a second aspect of the present invention, a printer system includes an external control device and the above printer controlled by the external control device, wherein the external control device includes a first association module, the main control in the printing assembly includes a second association module, and the first association module is associated with the second association module to implement transmission of print data.

The technical solution provided by the present invention may include the following beneficial effects:

According to the present invention, by providing the adsorption assembly and the moving assembly for the printer, providing the air inlet opened to the air intake passage of the air suction mechanism at the bottom of the main body, and providing the air inlet opened to the air outlet passage of the air suction mechanism at the bottom of the main body, the printer may be adsorbed onto the surface to be printed in complicated environment, such as the horizontal plane, the vertical plane, the slope plane, or the ceiling plane, etc., by the air suction mechanism. At the same time, the surface to be printed may be printed in accordance with the planned path by cooperating of the moving mechanism provided on the bottom part of the main body and the printing assembly. Therefore, the above improvement improves adaptability to the printing environment, operation convenience and intelligence of the printer.

It shall be understood that the above general description and the following detailed description are merely exemplary and explanatory and are not intended to be restrictive of the present disclosure.

### BRIEF DESCRIPTION OF THE DRAWINGS

The accompanying drawings, which are incorporated in and constitute a part of this specification, illustrate embodiments consistent with the disclosure, and together with the description, serve to explain the principle of the disclosure.
Fig 1 is a schematic perspective view of a printer at an angle in an exemplary embodiment of the present disclosure.
Fig. 2 is a schematic perspective view of a printer at another angle in an exemplary embodiment of the present disclosure.
Fig. 3 is a schematic diagram of an application scene of a printer in an exemplary embodiment of the present disclosure.
Fig 4 is a schematic perspective view of a printer in another exemplary embodiment of the present disclosure.
Fig 5 is a schematic diagram of an application scene of a printer system in another exemplary embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of devices and methods consistent with aspects related to the present disclosure as recited in the appended claims.

In the related art, effects of more and more wall surfaces are realized by printing, that is, using a printer to print a preset pattern on a designated wall surface. However, under normal circumstances, an area of the wall surface is pretty large, and circumstances of the slope and the flatness of the wall surface are complicated as well. In order to complete printing on the entire wall surface, the printer needs to be handheld to move on the wall, or a moving pedrail is set for the printer, which greatly increases operational complexity and structural complexity of the printer.

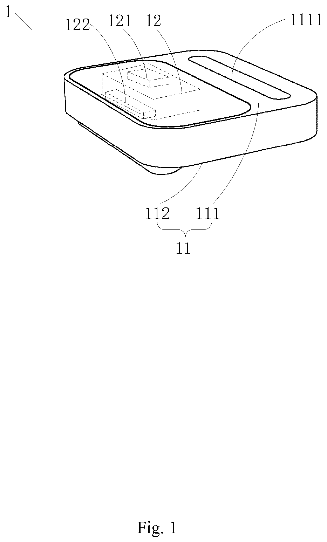

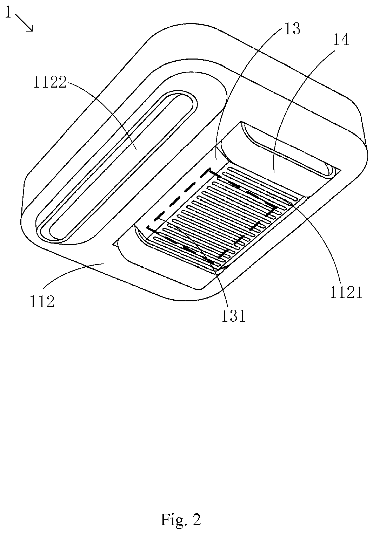

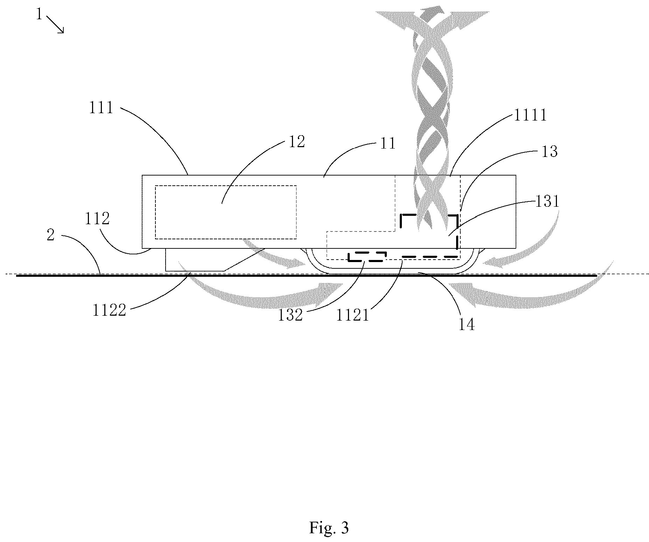

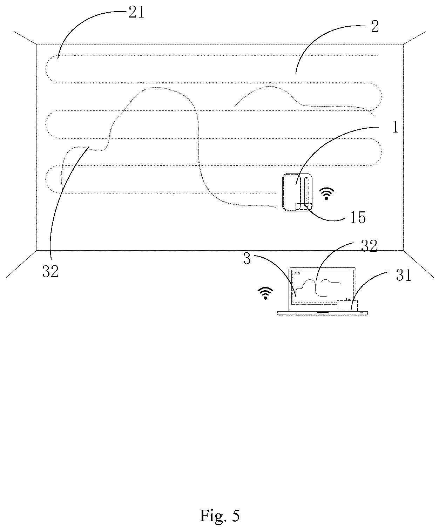

Fig 1 is a schematic perspective view of a printer 1 at an angle in an exemplary embodiment of the present disclosure; Fig. 2 is a schematic perspective view of the printer 1 at another angle in an exemplary embodiment of the present disclosure; and Fig. 3 is a schematic diagram of an application scene of the printer 1 in an exemplary embodiment of the present disclosure. Fig 5 is a schematic diagram of an application scene of a printer system in an exemplary embodiment of the present disclosure. Referring to Figs. 1-3 and 5, the printer 1 includes a main body 11, an adsorption assembly 13, a printing assembly 12, and a moving assembly 14. In the embodiment, the main body 11 includes a bottom part 112 adjacent to a surface 2 to be printed and a top part 111 opposite to the bottom part 112. The bottom part 112 is provided with an air inlet 1121 and an ink outlet 1122, and the top part 111 is provided with an air outlet 1111. The printing assembly 12 is assembled in the main body 11 and includes a main control 121 and an ink outlet mechanism 122 electrically connected to the main control 121. The ink outlet mechanism 122 is opened to the ink outlet 1122 so as to be controlled to implement printing operations on the surface 2 to be printed. The moving assembly 14 is assembled on the bottom part 112 of the main body 11 and is electrically connected to the main control 121 so as to be controlled to move along a planned path 21. The adsorption assembly 13 is assembled in the main body 11 and includes an air suction mechanism 131. An air intake passage of the air suction mechanism 131 is opened to the air inlet 1121, and an air outlet passage of the air suction mechanism 131 is opened to the air outlet 1111, so as to take out air from the bottom part 112 of the printer 1, such that the printer 1 is able to be absorbed onto the surface 2 to be printed by air pressure.

Since the air suction mechanism 131 is configured to make the printer 1 to cling onto the surface 2 to be printed by air pressure, it is less influenced by environmental factors of the surface 2 to be printed. The printer 1 may be adsorbed onto the surface 2 to be printed in complicated environment, such as a horizontal plane, a vertical plane, a slope plane, or a ceiling plane, etc. At the same time, the surface 2 to be printed may be printed in accordance with the planned path 21 by cooperating of a moving mechanism provided on the bottom part 112 of the main body 11 and the printing assembly 12. Therefore, the above improvement improves adaptability to the printing environment, the operation convenience and intelligence of the printer 1.

In the above embodiments, the main control 121 can perform path planning according to actual environmental conditions of the surface 2 to be printed, and is associated with the moving assembly 14 and the ink outlet mechanism 122, to control the moving assembly 14 and the ink outlet mechanism 122 to work synchronously, thereby implement the printing of a preset graphic 32. For example, the main control 121 can perform various functions, such as analyzing a distribution of the preset graphic 32, avoiding obstacles on the surface 2 to be printed, etc., according to the area of the surface 2 to be printed, The preset graphic 32 may be pre-stored on the main control 121, or data transmission of the preset graphic 32 may be realized by the association with an external control device 3 as well, which is not limited in the present disclosure.

The following is an exemplary description of structures and assembly method of the printing assembly 12, the adsorption assembly 13, and the moving assembly 14, respectively.

### 1. the adsorption assembly 13

As shown in Fig. 1, Fig. 2, and Fig. 3, the adsorption assembly 13 includes the air suction mechanism 131 and a suction detecting mechanism 132. The air intake passage of the air suction mechanism 131 is opened to the air inlet 1121, and the air outlet passage of the air suction mechanism 131 is opened to the air outlet 1111, so as to take out the air from the bottom part 112 of the printer 1, such that the printer 1 is absorbed onto the surface 2 to be printed by air pressure. In the embodiment, the suction detecting mechanism 132 is electrically connected to the air suction mechanism 131, so as to adjust the air suction amount of the air suction mechanism 131 in accordance with the magnitude of the absorption force while detecting the suction force of the printer 1.

In an embodiment, the printer 1 operating on an uneven wall surface is taken as an example. The printer 1 moving up and down may cause an increase or decrease in the air amount at the bottom part 112 of the printer 1, that is, the adsorption force applied on the printer 1 is thus changed. When the adsorption force becomes small, information of the decrease in the adsorption force may be fed back to the air suction mechanism 131 by the suction detecting mechanism 132, so that the air suction amount of the air suction mechanism 131 is increased to increase the adsorption force. Similarly, when the adsorption force becomes large, information of the increase in the adsorption force may be fed back to the air suction mechanism 131 by the suction detecting mechanism 132, so that the air suction amount of the air suction mechanism 131 is decreased to decrease the adsorption force. Since a small adsorption force may cause that the printer 1 has a risk of falling during the working process, and a large adsorption force will form large friction between the printer 1 and the surface 2 to be printed, adjustment of the adsorption force by the suction detecting mechanism 132 improves safety of use and work efficiency of the printer 1.

In the above embodiments, the air inlet 1121 is provided at the bottom part 112 of the main body 11 and configured to cooperate with the air suction mechanism 131 to take out the air of the bottom part 112 of the printer 1. In the embodiment, the air inlet 1121 may include a plurality of strip-shaped holes arranged side by side. By the strip-shaped holes arranged side by side, external artistic appearance of the printer 1 may be improved, and the air inlet 1121 is prevented from being too large to excessively suck in excessive impurities, thereby improving working safety of the air suction mechanism 131.

It should be noted that the air suction mechanism 131 may be a turbo or other devices capable of performing an air suction function, and the present disclosure is not limited thereto. When the air suction mechanism 131 is the turbo, the turbo matching the size of the printer 1 may be selected according to the size of the printer 1 to improve utilization of the internal space of the printer 1.

### 2. the moving assembly 14

As shown in Fig. 1, Fig. 2, and Fig. 3, the moving assembly 14 is a pedrail. The width of the pedrail matches the width of the bottom part 112 of the printer 1, and movement of the pedrail drives the printer 1 to move as a whole. Alternatively, the moving assembly 14 may include two pedrails as well, and the two pedrails are respectively arranged on both sides of the air inlet 1121, which avoids excessive occupation of the space of the bottom part 112 of the printer 1 by the pedrails, and improves stability and flexibility during the movement of the printer 1.

It should be noted that material of the pedrail may be soft rubber such as PE (polyethylene) or PP (polypropylene). The pedrail with the material of soft rubber can cushion collision that the printer 1 encounters during a moving process, so as to avoid problems of falling caused by the collision, to increase stability of the movement of the printer 1.

### 3. the printing assembly 12

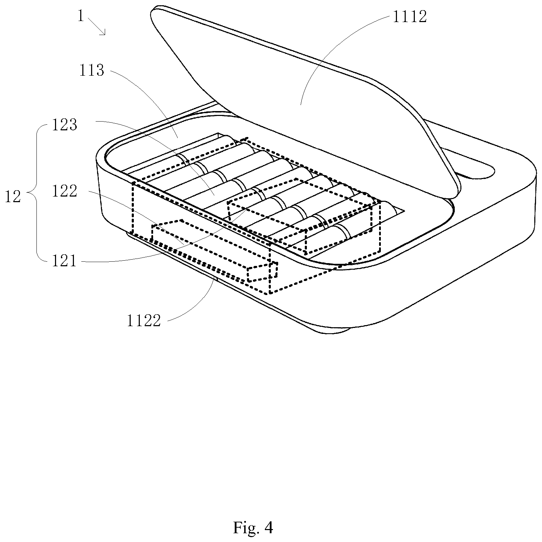

In the embodiment shown in Fig. 4, the printing assembly 12 includes the main control 121, the ink outlet mechanism 122, and an ink cartridge 123. In the embodiment, the ink outlet mechanism 122 is electrically connected to the main control 121, so as to control the ink outlet mode by the main control 121 according to the graphic to be printed. Further, the ink outlet mechanism 122 is opened to the ink cartridge 123, to perform a derivation processing of ink in the ink cartridge 123. The ink cartridge 123 may be an integrated ink cartridge assembled in the printer 1, which may avoid structural interference on the movement of the printer 1 when a complicated structure such as an ink tube is adopted.

In the above embodiments, the top part 111 of the main body 11 includes an opening and a cover plate 1112 that movably cooperates with the opening, and an interior part of the main body 11 is provided with an accommodating part 113 corresponding to the opening. The ink cartridge 123 is assembled in the accommodating part 113, the disassembly and replacement of the ink cartridge 123 may be realized by opening the cover plate 1112, and the ink cartridge 123 may be encapsulated in the accommodating part 113 by closing the cover plate 1112, thereby improving the convenience of disassembly, assembly and replacement of the ink cartridge 123.

Further, the ink outlet mechanism 122 is opened to the ink outlet 1122 of the bottom part 112 of the main body 11, so that the ink may be printed on the surface 2 to be printed through the ink outlet 1122. In the embodiment, the bottom part 112 includes an edge region, and the ink outlet 1122 is arranged at the edge region. An arrangement of the ink outlet 1122 in the edge region reduces the interference of the moving mechanism and the air inlet 1121 on an ink outlet operation, thereby improving printing efficiency.

The present disclosure further provides a printer system including the printer 1, as shown in Fig. 5, which includes an external control device 3 and the printer 1. The external control device 3 includes a first association module 31. The main control 121 includes a second association module 15. The first association module 31 is associated with the second association module 15 to implement transmission of print data, which improves the convenience and control intelligence of the printer system.

The printer 1 may be adsorbed onto the surface 2 to be printed of complicated environment, such as the horizontal plane, the vertical plane, the slope plane, or the ceiling plane, etc., by the air suction mechanism 131. At the same time, the surface 2 to be printed may be printed in accordance with the planned path 21 by cooperating of the moving mechanism provided on the bottom part of the main body 11 and the printing assembly 12. Therefore, the above improvement improves the adaptability to the printing environment, the operation convenience and intelligence of the printer 1.

In the above embodiments, the first association module 31 and the second association module 15 may be managed by a wireless network, so as to avoid the influence of a connection line on the operation of the printer 1, to improve the convenience of use. A specific work process may be that the second association module 15 of the printer 1 and the first association module 31 of the external control device 3 are connected via the wireless network, plane information, graphic information, etc., of the preset graphic 32 are transmitted to the main control 121 of the printer 1 through the external control device 3, and the main control 121 forms the planned path 21 based on the received information of the preset graphic 32. A user places the printer 1 on the starting point of the surface 2 to be printed, the printer 1 starts a printing work, that is, starts to be absorbed onto the plane and to draw graphic on the plane according to the planned path 21. A reminder module electrically connected to the main control 121 may be further provided for the printer 1. After the printer 1 completes drawing the graphic according to the planning path 21, the user is reminded to remove the printer 1 by the reminder module.

It should be noted that the external control device 3 may be a mobile phone, a computer, etc., and the present disclosure is not limited thereto.

After considering this description and practicing the embodiments disclosed here, those skilled in the art may easily think of other implementation of the present disclosure. The present disclosure intends to cover any variations, usage or adaptive change of these embodiments, and these variations, usage or adaptive change follow general principle of the present disclosure and include the common knowledge or the customary technical means in the technical field that is not disclosed in the present disclosure. The description and embodiments are only exemplary, and the real range of the present disclosure is defined by the following claims.

It should be understood that the present disclosure is not limited to precise structures that are described above and shown in the accompanying drawings, and may be modified and changed variously without departing from the range of the present disclosure. The scope of the present disclosure is only defined by the appended claims.

## Claims

1. A printer, comprising:
a main body (11), comprising a bottom part (112) adjacent to a surface to be printed and a top part (111) opposite to the bottom part (112), wherein the bottom part (112) is provided with an air inlet (1121) and an ink outlet (1122), and the top part is provided with an air outlet (1111);
an adsorption assembly (13), assembled in the main body (11) and comprising an air suction mechanism (131), wherein an air intake passage of the air suction mechanism is opened to the air inlet (1121), and an air outlet passage of the air suction mechanism is opened to the air outlet (1111);
a printing assembly (12), assembled in the main body (11) and comprising a main control (121) and an ink outlet mechanism (122) electrically connected to the main control (121), wherein the ink outlet mechanism is opened to the ink outlet; and
a moving assembly (14), assembled on the bottom part of the main body and is electrically connected to the main control, **characterized in that** the moving assembly (14) comprises at least one pedrail.

2. The printer according to claim 1, wherein the top part (111) of the main body (11) comprises an opening and a cover plate that movably cooperates with the opening, an interior part of the main body (11) is provided with an accommodating part corresponding to the opening, the printing assembly (12) further comprises an ink cartridge opened to the ink outlet mechanism, and the ink cartridge is assembled in the accommodating part.

3. The printer according to claim 1 or claim 2, wherein the adsorption assembly (13) further comprises a suction detecting mechanism electrically connected to the air suction mechanism (131).

4. The printer according to any one of the preceding claims, wherein the bottom part (112) comprises an edge region, and the ink outlet (1122) is arranged at the edge region.

5. The printer according to any one of the preceding claims, wherein the air inlet (1121) comprises a plurality of strip-shaped holes arranged side by side.

6. The printer according to any one of the preceding claims, wherein the air suction mechanism (131) comprises a turbo.

7. The printer according to claim 1, wherein the moving assembly (14) comprises two pedrails respectively arranged on both sides of the air inlet.

8. The printer according to claim 1 or claim 7, wherein material of the at least one pedrail comprises soft rubber.

9. A printer system, comprising:
an external control device (3); and
a printer (1) according to any one of claims 1-8, wherein the external control device (3) comprises a first association module, the main control in the printing assembly comprises a second association module, and the first association module is associated with the second association module to implement transmission of print data.

## Patentansprüche

1. Ein Drucker, aufweisend:
einen Hauptkörper (11), der einen unteren Teil (112) angrenzend an eine zu bedruckende Oberfläche und einen oberen Teil (111) gegenüber dem unteren Teil (112) umfasst, wobei der untere Teil (112) mit einem Lufteinlass (1121) und einem Tintenauslass (1122) ausgebildet ist und der obere Teil mit einem Luftauslass (1111) ausgebildet ist;
eine Adsorptionsanordnung (13), die in dem Hauptkörper (11) angebracht ist und einen Luftansaugmechanismus (131) umfasst, wobei ein Lufteinlassdurchgang des Luftansaugmechanismus zu dem Lufteinlass (1121) geöffnet ist und ein Luftauslassdurchgang des Luftansaugmechanismus zu dem Luftauslass (1111) geöffnet ist;
eine Druckanordnung (12), die in den Hauptkörper (11) angebracht ist und eine Hauptsteuerung (121) und einen Tintenauslassmechanismus (122) umfasst, der elektrisch mit der Hauptsteuerung (121) verbunden ist, wobei der Tintenauslassmechanismus zum Tintenauslass hin geöffnet ist; und
eine bewegliche Baugruppe (14), die am unteren Teil des Hauptkörpers montiert ist und elektrisch mit der Hauptsteuerung verbunden ist, **dadurch gekennzeichnet, dass** die bewegliche Baugruppe (14) mindestens ein Pedrail bzw. ein Füßchenrad umfasst.

2. Drucker nach Anspruch 1, wobei der obere Teil (111) des Hauptkörpers (11) eine Öffnung und eine Abdeckplatte umfasst, die beweglich mit der Öffnung zusammenwirkt, ein innerer Teil des Hauptkörpers (11) mit einem Aufnahmeteil versehen ist, das der Öffnung entspricht, die Druckbaugruppe (12) ferner eine Tintenpatrone umfasst, die zum Tintenauslassmechanismus hin geöffnet ist, und die Tintenpatrone in dem Aufnahmeteil angeordnet ist.

3. Drucker nach Anspruch 1 oder Anspruch 2, wobei die Adsorptionsanordnung (13) ferner einen Ansaugerkennungsmechanismus umfasst, der elektrisch mit dem Luftansaugmechanismus (131) verbunden ist.

4. Drucker nach einem der vorhergehenden Ansprüche, wobei das untere Teil (112) einen Randbereich aufweist und der Tintenauslass (1122) am Randbereich angeordnet ist.

5. Drucker nach einem der vorhergehenden Ansprüche, wobei der Lufteinlass (1121) eine Vielzahl von nebeneinander angeordneten streifenförmigen Löchern aufweist.

6. Drucker nach einem der vorhergehenden Ansprüche, wobei der Luftansaugmechanismus (131) einen Turbo umfasst.

7. Drucker nach Anspruch 1, wobei die bewegliche Baugruppe (14) zwei Pedrails umfasst, die jeweils auf beiden Seiten des Lufteinlasses angeordnet sind.

8. Drucker nach Anspruch 1 oder Anspruch 7, wobei das Material der mindestens einen Pedrails aus Weichgummi besteht.

9. Ein Druckersystem, umfassend:
ein externes Steuergerät (3); und
einen Drucker (1) nach einem der Ansprüche 1 bis 8, wobei die externe Steuervorrichtung (3) ein erstes Zuordnungsmodul umfasst, die Hauptsteuerung in der Druckanordnung ein zweites Zuordnungsmodul umfasst und das erste Zuordnungsmodul mit dem zweiten Zuordnungsmodul verbunden ist, um die Übertragung von Druckdaten zu implementieren.

## Revendications

1. Une imprimante, comprenant :
un corps principal (11), comprenant une partie inférieure (112) adjacente à une surface à imprimer et une partie supérieure (111) opposée à la partie inférieure (112), dans lequel la partie inférieure (112) est pourvue d'une entrée d'air (1121) et d'une sortie d'encre (1122), et la partie supérieure est pourvue d'une sortie d'air (1111) ;
un ensemble d'adsorption (13), assemblé dans le corps principal (11) et comprenant un mécanisme d'aspiration d'air (131), dans lequel un passage d'admission d'air du mécanisme d'aspiration d'air est ouvert vers l'entrée d'air (1121), et un passage de sortie d'air du mécanisme d'aspiration d'air est ouvert vers la sortie d'air (1111) ;
un ensemble d'impression (12), assemblé dans le corps principal (11) et comprenant une commande principale (121) et un mécanisme de sortie d'encre (122) connecté électriquement à la commande principale (121), dans lequel le mécanisme de sortie d'encre est ouvert à la sortie d'encre ; et
un ensemble mobile (14), assemblé sur la partie inférieure du corps principal et connecté électriquement à la commande principale, **caractérisé en ce que** l'ensemble mobile (14) comprend au moins un pédalierou un pedrail.

2. Imprimante selon la revendication 1, dans laquelle la partie supérieure (111) du corps principal (11) comprend une ouverture et une plaque de couverture qui coopère de manière mobile avec l'ouverture, une partie intérieure du corps principal (11) est pourvue d'une partie de logement correspondant à l'ouverture, l'ensemble d'impression (12) comprend en outre une cartouche d'encre ouverte sur le mécanisme de sortie d'encre, et la cartouche d'encre est assemblée dans la partie de logement.

3. Imprimante selon la revendication 1 ou la revendication 2, dans laquelle l'ensemble d'adsorption (13) comprend en outre un mécanisme de détection d'aspiration relié électriquement au mécanisme d'aspiration d'air (131).

4. Imprimante selon l'une quelconque des revendications précédentes, dans laquelle la partie inférieure (112) comprend une zone de bord, et la sortie d'encre (1122) est disposée au niveau de la zone de bord.

5. Imprimante selon l'une quelconque des revendications précédentes, dans laquelle l'entrée d'air (1121) comprend une pluralité de trous en forme de bande disposés côte à côte.

6. Imprimante selon l'une quelconque des revendications précédentes, dans laquelle le mécanisme d'aspiration d'air (131) comprend un turbo.

7. Imprimante selon la revendication 1, dans laquelle l'ensemble mobile (14) comprend deux pedrails respectivement disposées de part et d'autre de l'entrée d'air.

8. Imprimante selon la revendication 1 ou la revendication 7, dans laquelle le matériau de l'au moins un pedrail comprend du caoutchouc souple.

9. Un système d'imprimante, comprenant :
un dispositif de commande externe (3) ; et
Imprimante (1) selon l'une quelconque des revendications 1 à 8, dans laquelle le dispositif de commande externe (3) comprend un premier module d'association, la commande principale dans l'ensemble d'impression comprend un deuxième module d'association, et le premier module d'association est associé au deuxième module d'association pour mettre en œuvre la transmission des données d'impression.
